# EUROPEAN PATENT APPLICATION

(11) **EP 2 070 746 A1**
(43) Date of publication of application: **17.06.2009**
(21) Application number: 08170257.3
(22) Date of filing: 28.11.2008
(51) Int. Cl.: B60H 1/00, F24F 13/15

(54) **Variable position low profile shutter valves**

(30) Priority: 10.12.2007 US 1106
(71) Applicant: Delphi Technologies, Inc., Troy, Michigan 48007 (US)
(72) Inventor: Stevenson, Mark W., Appleton, NY 14008 (US); Goupil, Jr., Gerald M., N. Tonawanda, NY 14120 (US); Kowalski, Gregory J., Cambria, NY 14132 (US)
(74) Representative: Robert, Vincent

(57) **Abstract**

An assembly for controlling air flow in an HVAC system includes a mechanism **(48)** for differentially rotating valves **(38,46)** different degrees of rotation. The mechanism **(48)** includes a control device **(44)** on each shaft **(42)** of each valve including a pin extending axially from each valve plate **(40).** A slide defines a plurality of serpentine slots **(56)** with one of the pins slidably disposed in each of the slots **(56)**. The slots **(56)** each follow a path incongruent from one another for differentially rotating the valve plates **(40)** in response to the slide sliding along the guide **(60)** and the pins moving along the paths of the slots **(56)**.

## Description

### TECHNICAL FIELD

The present invention relates generally to an HVAC system. More specifically it relates to an assembly for mixing hot air and cooled air in an HVAC system.

### BACKGROUND OF THE INVENTION

Vehicle manufacturers are requesting HVAC modules that are smaller, lower cost, lower mass and require less time to develop. One of the components that comprise these HVAC modules is the air distribution and tempering valves. These valves which are found in production today are manufactured from metal with foam or rubber for sealing; from plastic with foam or rubber for sealing; or from fabric that is slid over a smooth plastic surface (i.e. film valve) in which air pressure pushing the fabric against the plastic surface provides the sealing. The plastic or metal valves either rotate about an axis (i.e. butterfly, end pivot) to regulate airflow through a given air passage or slide within a track (i.e. guillotine) allowing air to pass through a given air passage. While the film has take up and let-off shafts that spool and un-spool material therefore shifting apertures that are cut in the film to align with openings in the case therefore regulating airflow through a given passage.

Typically, these valves are arranged in parallel and rotate together in a 1:1 relationship. For example, the outer valves may be linked via a lever to a center valve. The center valve has a coupler for attachment to an actuator. As the actuator rotates this valve, the links transfer the motion to the outer two valves resulting in a 1:1 relationship in angular travel, i.e., all valves rotate in unison. Generally, there are two sets of valves wherein one set of valves directs cooled air exiting the evaporator and the other set of valves directs heated air exiting the heater.

Examples of such valve assemblies are disclosed in U.S. Patents 6,254,475, and 6,814,137.

U.S. Patent 6,254,475 to Danieau et al. describes an air flow control assembly including a frame carrying pivotable vanes, which are rotated on parallel axes by a common drive mechanism. The setting of the vanes is variable between a maximum flow position, in which the flaps have a minimum inclination with respect to the direction of air flow through the register, and a no-flow position in which this inclination is a maximum. The drive mechanism controls the pivoting of the vanes in such a way that they all rotate by the same degree of rotation, with adjacent vanes rotating in opposite directions.

### SUMMARY OF THE INVENTION

The invention provides an HVAC system including a mechanism for simultaneously and differentially rotating valves plates different degrees of rotation and method of mixing air in an HVAC system including the step of simultaneously and differentially rotating the valve plates different degrees of rotation to control air flowing in the housing.

Typical valve assemblies, in which the valves rotate in 1:1 relationship to one another, do not promote mixing of the hot and cold air causing hot and cold air separations that impact linearity. The present invention avoids the hot and cold air separations by improving mixing of the hot and cold air streams while using a single input to actuate rotation of each valve plate.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a cross-sectional view of an embodiment of the invention illustrating the valve plates at different degrees of rotation;

Figure 2 is a cross-sectional view of an embodiment of the invention illustrating the mechanism including a slide having incongruent slots;

Figure 3 is a perspective view of the embodiment shown in Fig. 2 illustrating the warm air valve plates being in a closed position;

Figure 4 is a perspective view of the embodiment shown in Figs. 2 and 3 illustrating the valve plates at different degrees of rotation;

Figure 5 is a perspective view of the embodiment shown in Figs. 2-4 illustrating the lever arms disposed on the shafts of the valves and the teeth of the slide engaging the gear;

Figure 6 is a perspective fragmentary view of an embodiment of a valve; and

Figure 7 is a perspective fragmentary view of an alternative embodiment of a valve.

### DESCRIPTION OF THE PREFERRED EMBODIMENT

Referring to the Figures, wherein like numerals indicate corresponding parts throughout the several views, an assembly for controlling air flow in an HVAC system is generally shown.

A housing **20** defines a passage for conveying air and a blower **22** is disposed in the housing **20** for blowing the air through the passage of the housing **20.** An evaporator **24** is disposed in the housing **20** for cooling the air flowing in the passage. A heater **26** is disposed in the housing **20** for heating a portion of the air flowing in the passage. A frame **28** is generally indicated and has a first half **30** generally indicated and defining a first end **32** and a second half **34** generally indicated and defining a second end **36.** The frame **28** extends transversely to the passage between the first end **32** and the second end **36** in the housing **20.**

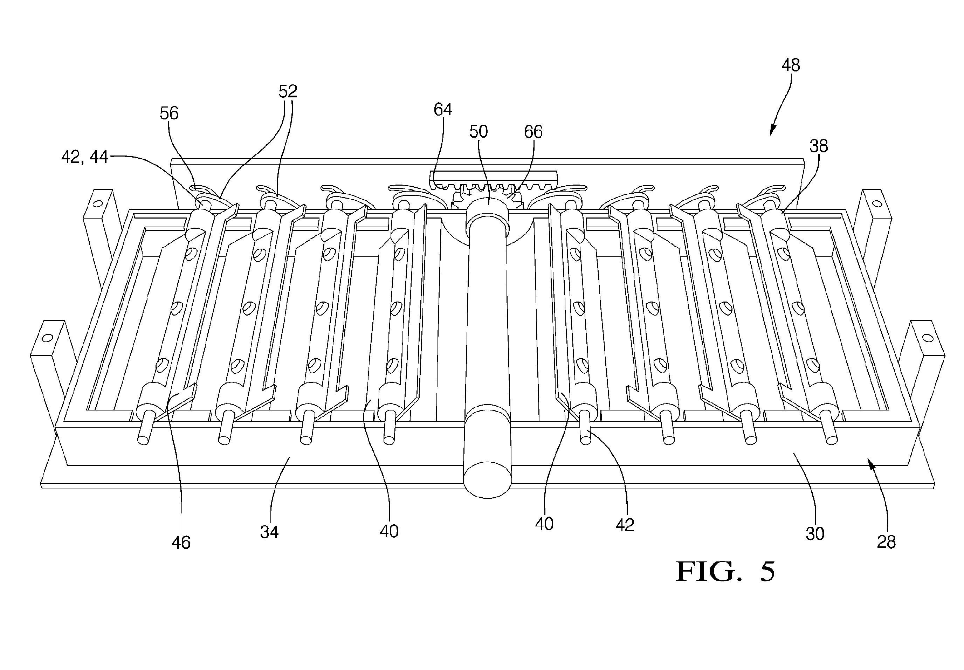

A plurality of cool air valves **38** are generally indicated and are rotatably supported on the first half **30** of the frame **28** for rotation between open and closed positions to control cooled air exiting the evaporator **24.** The cool air valves **38** include parallel valve plates **40** each generally indicated and each having a shaft **42** fixed relative to the valve plate **40** and with a control device **44** generally indicated and extending through the frame **28.** Similarly, a plurality of warm air valves **46** are generally indicated and are rotatably supported on the second half **34** of the frame **28** for rotation between open and closed positions to control heated air exiting the heater **26.** The warm air valves **46** include like parallel valve plates **40** each generally indicated and also having a shaft **42** fixed relative to the valve plate **40** and with a like control device **44** generally indicated and extending through the frame **28.** The cool air valves **38** and warm air valves **46** are best illustrated in Fig. 5.

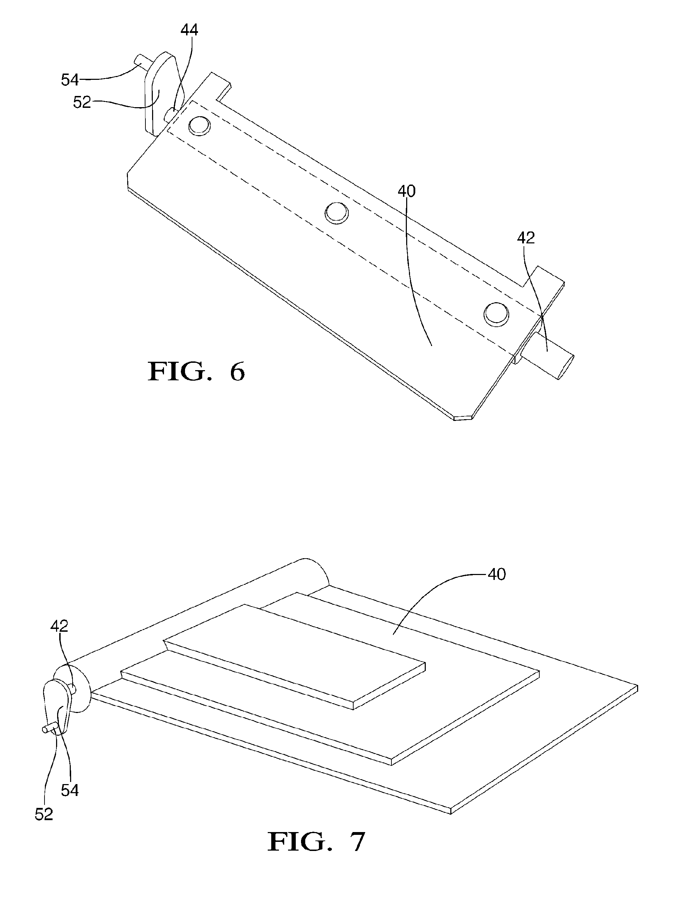

The valve plates **40** of the valves **38, 46** may be thin, flat plates extending from the shaft **42** and having a uniform thickness as shown in Fig. 6. Alternatively, the valve plates **40** may have a thickness which is non-uniform. Specifically, the thickness of the valve plates **40** may vary wherein the thickness of each valve plate **40** is greatest at the location where the first half **30** of the frame **28** meets the second half **34** of the frame **28** and decreases outwardly, as shown in Fig. 7. In other words, a portion of the valve plate **40** located at the center of the shaft **42** has the greatest thickness and the portions of the valve plate **40** located at the perimeter of the plates have the smallest thickness. As shown in Fig. 7, the thickness of the valve plate **40** decreases as it extends radially away from the shaft **42.**

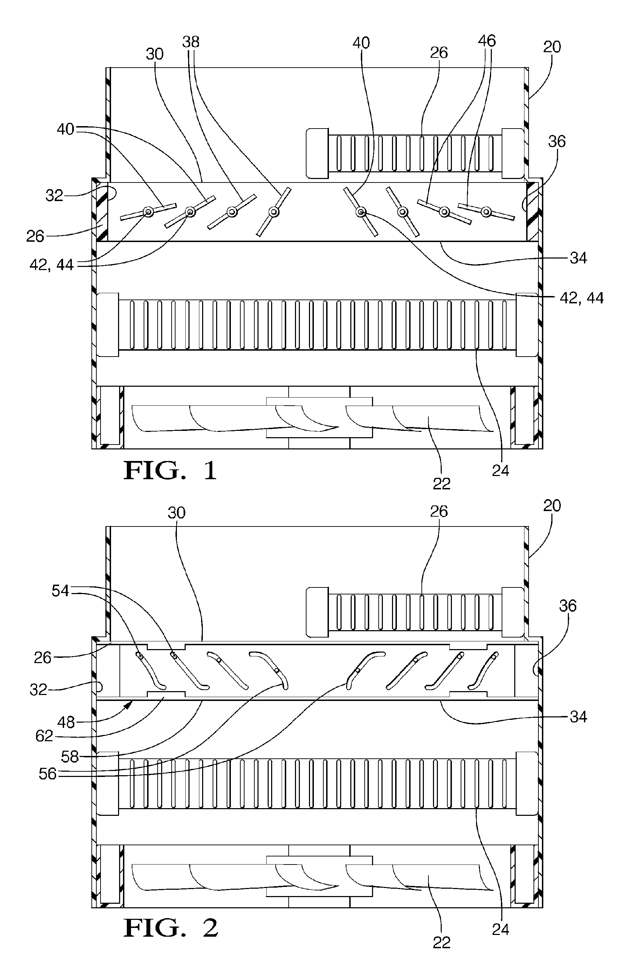

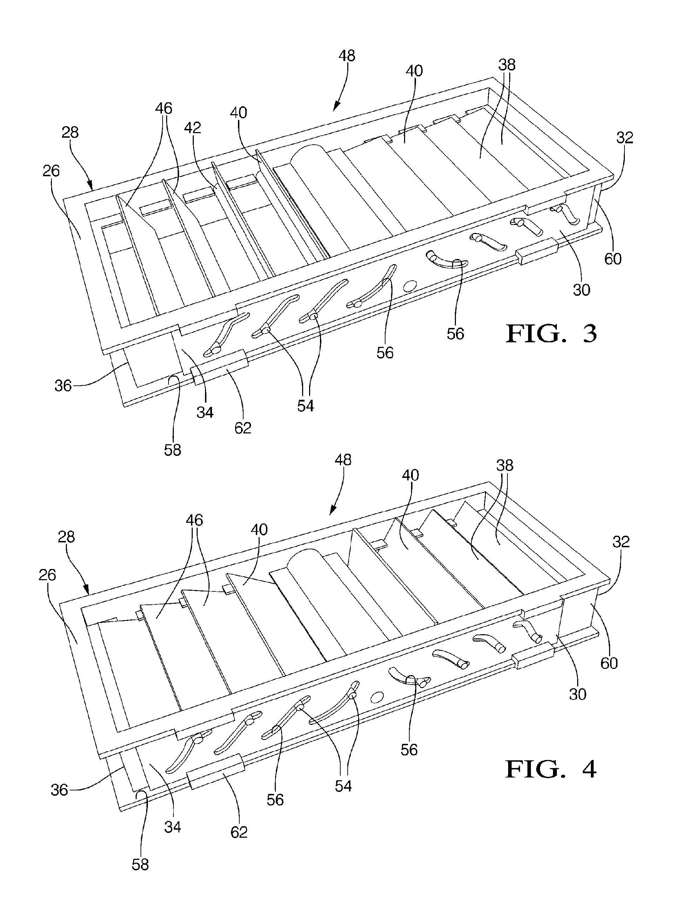

The invention is distinguished by a mechanism **48** generally shown in Figs. 2-5 for simultaneously and differentially rotating the valve plates **40** different degrees of rotation, including zero degrees, which means one or more valve plates **40** can be retained in a stationary position. Additionally, one or more valve plates **40** can be retained in a dwell, i.e., can be stationary over a specified period of time. In other words, the mechanism **48** rotates each valve plate **40** a predetermined degree of rotation which is dedicated to that valve plate **40** for a single input, i.e., each valve plate **40** rotates a predetermined degree different from all other valve plates **40** in each respective half of the frame **28.**

For example, in an assembly having four valve plates **40** on each half of the frame **28,** a specified input may rotate the valve plate **40** closest to the control device **44** of the shaft **42** positive *a* degrees from an open or axially aligned position, while the next closest valve plate **40** rotates *a* + *x* degrees, the third closest valve plate **40** rotates *a* + *x* + *y* degrees, and the valve plate **40** closest to a center of the shaft **42** rotates *a* + *x* + *y* + *z* degrees. Although the valve plates **40** in Fig. 5 may appear to be rotated the same degree because of the perspective, the valve plates **40** are in actuality rotated different degrees of rotation.

The preferred embodiment of the mechanism **48** is shown in Figs. 2-5, however one skilled in the art will appreciate that many other combinations of mechanical components made be used to provide a mechanism **48** for differentially rotating the valves **38, 46.** As an example, a rotary cam (not shown) could be disposed adjacent the valves **38, 46** wherein the valves **38, 46** (or a lever arm **50** attached to the valves **38, 46** ) slide **52** along the respective slot **54,** trace, groove or projection within the cam as the cam rotates. Multiple cams with gear teeth **56** around their perimeter could all rotate simultaneously while each cam has a different set of projections thereby differentially rotating the valves **38, 46.**

The preferred embodiment of the control device **44,** as best illustrated in Figs. 6-7, includes a lever arm **50** extending radially from each of the control devices **44** of the shafts **42** of the valves **38, 46.** The control device **44** also includes a pin **58** extending axially from the lever arm **50** in spaced and parallel relationship to the respective shaft **42** supporting the lever arm **50.**

The preferred embodiment of the mechanism **48** includes a slide **52** defining a plurality of serpentine slots **54** wherein one of the control devices **44,** e.g., one of the pins **58** is slidably disposed in each of the slots **54** for rectilinearly movement adjacent the valve plates **40.** The mechanism **48** further includes a guide **60** generally indicated and extending from the first end **32** of the frame **28** to the second end **36** of the frame **28** wherein the guide **60** slidably supports the slide **52.**

As shown in Fig. 5, the guide **60** is a U-shaped channel **62** that defines an open side and extends between the ends **32, 36** of the frame **28.** The guide **60** includes a plurality of brackets **64** partially enclosing the open side of the channel **62** for restricting movement of the slide **52** in the guide **60** to retain the slide **52** in engagement with the guide **60.** To actuate the mechanism **48,** the slide **52** has a plurality of teeth **66,** as shown in Fig. 5. A gear **68** is generally indicated and rotatably supported on the frame **28** and includes gear teeth **56** engaging the teeth **66** of the slide **52** for moving the slide **52** rectilinearly along the guide **60** between the ends **32, 36** of the frame **28.** A motor (not shown) rotates the gear **68.**

The slots **54** of the slide **52** each follow a path incongruent from one another, as shown in Fig. 2, for rotating the lever arms **50** different degrees of rotation thereby differentially rotating the valve plates **40** in response to rotation of the gear **68.** Preferably, the slots **54** corresponding to the warm air valves **46** follow a path opposite from, or mirror-images of, the paths following by the slots **54** corresponding to the cool air valves **38.**

The mechanism **48** includes a means for maintaining at least one of said valve plates **40** stationary during rotation of remaining ones of said valve plates **40** for a dwell period. For example, in the embodiment shown in the Figures, the paths of the certain slots **54** may be arranged such that the respective valve plate **40** remains stationary for a specified angle of rotation of the input gear **68.**

The invention includes a method of mixing air in an HVAC system of the type including a housing **20** defining a passage for conveying air, a plurality of parallel valve plates **40** supported in the housing **20** for rotation between open and closed positions. The method is distinguished by the step of simultaneously and differentially rotating the valve plates **40** different degrees of rotation to differentially control air flowing in the housing **20.** The slide **52** is moved rectilinearly adjacent the valve plates **40** and the rectilinearly movement of the guide **60** is converted to a different degree of rotation of each respective valve plate **40.**

In operation, the gear **68** is rotated a specified angle and direction which slides **52** the slide **52** along the guide **60.** As the slide **52** move relative to the guide **60,** the pins **58** in each slot **54** of the slide **52** move along the respective path of the slot **54.** As the pins **58** move along the paths of the slots **54,** the lever arms **50** on which the pins **58** are disposed rotate, thereby rotating the shafts **42** of the valves **38, 46** and the corresponding valve plates **40** fixed to the shafts **42.** Because the paths of the slots **54** are incongruent from one another the pins **58** follow different paths from one another and the lever arms **50** rotate different degrees of rotation for each given input rotation of the gear **68.** Accordingly, the invention is distinguished by a mechanism **48** for differentially rotating the valves **38, 46** including providing the ability to dwell any desired valves **38, 46.**

While the invention has been described with reference to an exemplary embodiment, it will be understood by those skilled in the art that various changes may be made and equivalents may be substituted for elements thereof without departing form the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An assembly for controlling air flow in an HVAC system comprising;
a housing **(20)** defining a passage for conveying air,
a plurality of valves **(38, 46)** supported in said housing **(20)** for rotation between open and closed positions to control air flowing in said housing **(20),** said valves **(38, 46)** each including parallel valve plates **(40)** each having a shaft **(42),**
a mechanism **(48)** for simultaneously and differentially rotating said valves **(38, 46)** plates different degrees of rotation.

2. An assembly as set forth in claim 1 wherein said mechanism **(48)** includes a means for maintaining at least one of said valve plates **(40)** stationary during rotation of remaining ones of said valve plates **(40)** for a dwell period.

3. An assembly as set forth in claim 2 including a control device **(44)** on each of said valves **(38, 46).**

4. An assembly as set forth in claim 3 wherein said control device **(44)** includes a pin **(58)** extending axially from each of said valve plates **(40)** in spaced and parallel relationship to the respective shaft **(42).**

5. An assembly as set forth in claim 4 wherein said mechanism **(48)** includes a slide **(52)** defining a plurality of slots **(54)** with one of said pins **(58)** slidably disposed in each of said slots **(54).**

6. An assembly as set forth in claim 5 wherein said mechanism **(48)** includes a guide **(60)** supported by said housing **(20)** and slidably supporting said slide **(52).**

7. An assembly as set forth in claim 6 wherein said slots **(54)** of said slide **(52)** each following a path incongruent from one another for rotating said valve plates **(40)** different degrees of rotation in response to sliding of said slide **(52).**

8. An assembly as set forth in claim 7 wherein said paths of said slots **(54)** are serpentine.

9. An assembly as set forth in claim 7 wherein said shaft **(42)** of said valve is rotatably supported in said housing **(20)** and fixed relative to said valve plates **(40)** and said control device **(44)** includes a lever arm **(50)** extending radially from each of shafts **(42)** of said valves **(38, 46)** and wherein said pin **(58)** extends axially from said lever arm **(50)** and said lever arms **(50)** rotate different degrees of rotation.

10. An assembly as set forth in claim 7 wherein said guide **(60)** includes a U-shaped channel **(62)** defining an open side and a plurality of brackets **(64)** partially enclosing said open side of said channel **(62)** for restricting movement of said slide **(52)** in said guide **(60)** to retain said slide **(52)** in sliding engagement with said guide **(60).**

11. An assembly as set forth in claim 7 wherein said slide **(52)** has a plurality of teeth **(66)** and further comprising a gear **(68)** rotatably supported on said frame **(28)** and including gear teeth **(56)** engaging said teeth **(66)** of said slide **(52)** for moving said slide **(52)** rectilinearly along said guide **(60).**

12. An assembly as set forth in claim 7 wherein said valves **(38, 46)** include cool air valves **(38)** and warm air valves **(46).**

13. An assembly as set forth in claim 12 further comprising a frame **(28)** extending between a first end **(32)** and a second end **(36)** transversely to said passage wherein said guide **(60)** extends from said first end **(32)** of said frame **(28)** to said second end **(36)** of said frame **(28)** and wherein said frame **(28)** has a first half **(30)** defining said first end **(32)** and a second half **(34)** defining said second end **(36)** and wherein said cool air valves **(38)** are supported on said first half **(30)** of said frame **(28)** and said warm air valves **(46)** are supported on said second half **(34)** of said frame **(28).**

14. An assembly as set forth in claim 13 wherein said frame **(28)** has a first half **(30)** defining said first end **(32)** and a second half **(34)** defining said second end **(36)** and wherein said cool air valves **(38)** are supported on said first half **(30)** of said frame **(28)** and said warm air valves **(46)** are supported on said second half **(34)** of said frame **(28).**
